# EUROPEAN PATENT APPLICATION

(11) **EP 2 169 520 A2**
(43) Date of publication of application: **31.03.2010**
(21) Application number: 09162779.4
(22) Date of filing: 16.06.2009
(51) Int. Cl.: G06F 3/045

(54) **Touch panel using tempered glass**

(30) Priority: 26.09.2008 KR 20080094828; 26.09.2008 KR 20080094830; 26.09.2008 KR 20080094831; 26.11.2008 WO PCT/KR2008/006952
(71) Applicant: Tovis Co. Ltd., Yeonsu-gu, Incheon 406-840 (KR)
(72) Inventor: Sang Yeong, Lee, Manan-gu, Anyang-si, Gyeonggi-do (KR); Hee Won, Back, Dongan-gu, Anyang-si, Gyeonggi-do (KR)
(74) Representative: Strobel, Wolfgang

(57) **Abstract**

A touch panel using tempered glass includes a first conductive unit and a second conductive unit. The first conductive unit includes a conductive film, a first indium-tin oxide (ITO) coating layer coated on a lower surface of the conductive film, and a first electrode printed on an edge of a lower surface of the first ITO coating layer. The second conductive unit includes a tempered glass substrate formed of tempered glass, a second ITO coating layer coated on an upper surface of the tempered glass substrate, and a second electrode printed on an edge of an upper surface of the second ITO coating layer. The touch panel using tempered glass not only exhibits substantially improved strength and rigidity, but also has a variety of designs.

## Description

### Technical Field

The present invention relates to a touch panel using tempered glass, and more particularly, to a touch panel using tempered glass which not only exhibits substantially improved strength and rigidity compared to a conventional touch panel, but also has a variety of designs.

### Background Art

As computers using digital technologies have developed, auxiliary devices have developed as well. Personal computers (PCs), mobile transmission devices, and other personal information processors process text and graphics using a variety of input devices such as keyboards, mice, or digitizers.

As the use of PCs gradually increases with the advent of information society, it is difficult to efficiently operate a product with the keyboard and mouse only working as an input device or interface. Thus, there is a strong demand for a device which is simple, has less misoperation, is easy to input, and particularly, is capable of manually inputting information while carrying the device.

Recently, micro technologies such as manufacturing technologies related to design and processing including high reliability, new functions, durability, and materials or substances receive more attention rather than satisfaction to the need related to general function of the device. To meet the above needs, a touch panel that is simple and has less misoperation has developed as an input device capable of inputting information such as text without other input devices.

The touch panel is installed on a display surface of an image display device such as flat display devices including liquid crystal display devices (LCDs), plasma display panels (PDPs), or electroluminescences (ELs), and cathode ray tubes (CRTs), and used to select desired information while watching the image display device. The touch panel includes a resistive type touch panel and a capacitive type touch panel.

Also, the touch panel is classified into a general type touch panel and a window type touch panel according to whether a window film is included or not. The conventional general type touch panel has a problem that dusts and moisture intrudes in an adjacent portion of the touch panel and the case, and that the outermost area of the touch panel cannot be touched.

In contrast, in the conventional window type touch panel, a substrate is manufactured using a material such as acryl so that it may be difficult to process an outer corner of the touch panel to be curved. In particular, the conventional window type touch panel is weak to heat and has inferior light transmissivity.

Also, a scattering prevention film is separately attached to the conventional touch panel to prevent scattering of debris when a window protecting an LCD module is broken. The scattering prevention film increases the thickness of the touch panel and further deteriorates the light transmissivity of the touch panel.

### Disclosure of the Invention

The purpose of the present invention is provide a touch panel using tempered glass which not only exhibits substantially improved strength and rigidity compared to a conventional touch panel, but also has a variety of designs.

The present invention provides a touch panel using tempered glass which not only exhibits substantially improved strength and rigidity compared to a conventional touch panel, but also has a variety of designs.

### Best mode for carrying out the Invention

According to an aspect of the present invention, a touch panel using tempered glass includes a first conductive unit which comprises a conductive film, a first indium-tin oxide (ITO) coating layer coated on a lower surface of the conductive film, and a first electrode printed on an edge of a lower surface of the first ITO coating layer; and a second conductive unit which comprises a tempered glass substrate formed of tempered glass, a second ITO coating layer coated on an upper surface of the tempered glass substrate, and a second electrode printed on an edge of an upper surface of the second ITO coating layer.

The touch panel using tempered glass may further include a conductive unit protection unit which is provided on an upper surface of the first conductive unit to protect the first conductive unit.

The conductive unit protection unit may include a window film provided in an area having a size that is substantially the same as that of the conductive film or the first substrate.

The touch panel of the present invention may further include a printing layer printed on a lower surface of the window film, wherein a character or a logo is marked on the printing layer.

The window film may be formed of a poly ethylene terephthalate (PET) film.

The first conductive unit and the conductive unit protection unit may be attached to each other using an optical clear adhesive (OCA).

The tempered glass substrate may be formed by an etching process. The etching process may be a laser etching process.

The tempered glass substrate may be one of a plurality of tempered glass substrates provided by performing an etching process to a glass sheet that is formed of tempered glass.

The first conductive unit and the second conductive unit may be attached to each other using an insulating adhesive member having an insulation characteristic.

An insulation material may be coated between the first conductive unit and the second conductive unit.

The tempered glass substrate may have a curved edge.

According to another aspect of the present invention, a touch panel using tempered glass includes a window unit formed of a tempered glass material, and a touch pad unit coupled to a lower surface of the window unit and inputting an electric signal to a liquid crystal display (LCD) module for forming an image when the window unit is touched and preventing scattering of glass debris when the window unit is destroyed.

The touch pad unit may include an indium-tin oxide (ITO) film coated with ITO, and an electrode printed in an edge of a lower surface of the ITO film.

The ITO film may have a size that is substantially the same as that of the window unit.

The window unit and the ITO film may be attached to each other using an optical clear adhesive (OCA).

The window unit may further include a printing layer, the printing layer provided on a lower surface of the window unit and on which a character or a logo is marked.

The touch pad unit may include an ITO coating layer coated on a lower surface of the window unit, and an electrode printed in an edge of a lower surface of the ITO coating layer.

The touch panel may include a window film provided on an upper surface of the window unit to protect the window unit.

The window film may further include a printing layer, the printing layer provided on a lower surface of the window unit and on which a character or a logo is marked.

The window film may be formed of a poly ethylene terephthalate (PET) film.

The window unit and the window film may be attached to each other using an optical clear adhesive (OCA).

The window unit may be formed by an etching process. The etching process may be a laser etching process.

The window unit may be one of a plurality of window units provided by performing an etching process to a glass sheet that is formed of tempered glass.

### Brief Description of the Drawings

- FIG. 1: is an exploded perspective view of a touch panel using tempered glass according to an embodiment of the present invention;
- FIG. 2: is a side view of the touch panel using tempered glass of FIG. 1;
- FIG. 3: schematically illustrates a method of forming a tempered glass substrate of the touch panel using tempered glass of FIG. 1;
- FIG. 4: is an exploded perspective view of a touch panel using tempered glass according to another embodiment of the present invention;
- FIG. 5: is a side view of the touch panel using tempered glass of FIG. 4;
- FIG. 6: is an exploded perspective view of a touch panel using tempered glass according to another embodiment of the present invention;
- FIG. 7: is a side view of the touch panel using tempered glass of FIG. 6;
- FIG. 8: is an exploded perspective view of a touch panel using tempered glass according to another embodiment of the present invention;
- FIG. 9: is a side view of the touch panel using tempered glass of FIG. 8;
- FIG. 10: is an exploded perspective view of a touch panel using tempered glass according to another embodiment of the present invention;
- FIG. 11: is a side view of the touch panel using tempered glass of FIG. 10;
- FIG. 12: is a side view of a touch panel using tempered glass according to another embodiment of the present invention; and
- FIG. 13: is a side view of a touch panel using tempered glass according to another embodiment of the present invention.

### Detailed Description of the Invention

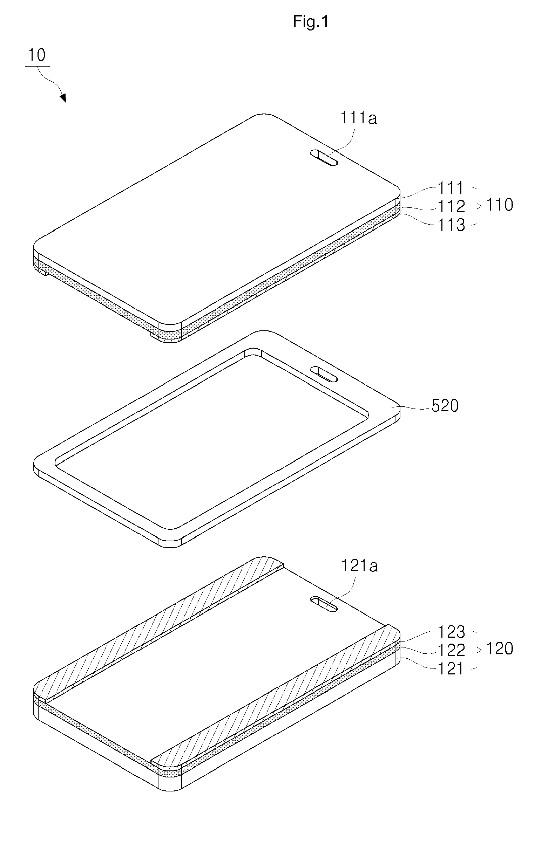

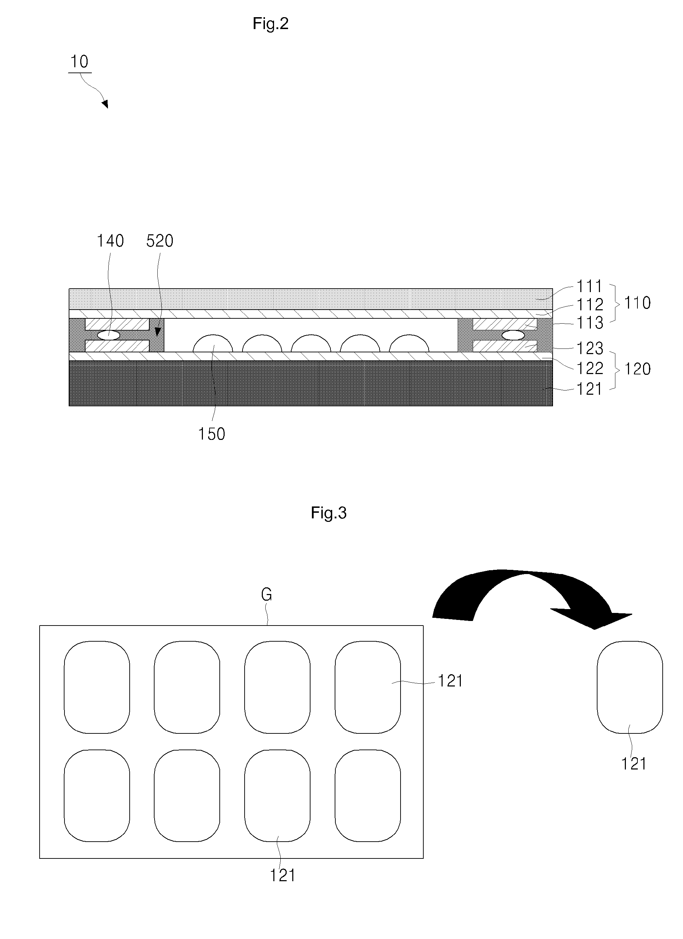

FIG. 1 is an exploded perspective view of a touch panel using tempered glass according to an embodiment of the present invention. FIG. 2 is a side view of the touch panel using tempered glass of FIG. 1. FIG. 3 schematically illustrates a method of forming a tempered glass substrate of the touch panel using tempered glass of FIG. 1.

Referring to FIGS. 1, 2, and 3, a touch panel 10 using tempered glass according to an embodiment of the present invention includes a first conductive unit 110 and a second conductive unit 120 separated a predetermined distance from the first conductive unit 110.

The first conductive unit 110 is provided to electrically input information to an LCD module (LCM; not shown) arranged at the side of an LCD (not shown) to form an image. The first conductive unit 110 includes a conductive film 111, a first indium-tin oxide (ITO) coating layer 112 coated on a lower surface of the conductive film 111, and a first electrode 113 printed on the edge of a lower surface of the first ITO layer 112.

The conductive film 111 is a film formed of a general poly ethylene terephthalate (PET) material. The PET is widely used for video tapes, audio tapes, capacitors, electronic materials, optics, electric insulation, electric wires, and advertisement panels, and refers to a material that is relatively safe and easy to recycle.

The first ITO coating layer 112 is obtained by coating indium tin oxide (ITO) on the lower surface of the conductive film 111. The ITO is transparent and electrically conductive. In general, the conductivity of ITO is realized by coating ITO on a transparent substrate as a thin film by wet coating or dry coating. The ITO is widely used for LCDs by being coated on a glass substrate.

The first ITO coating layer 112 may be provided as an ITO patterning layer (not shown) on which ITO is partially coated as necessary. The first electrode 113 printed on the edge of the lower surface of the first ITO coating layer 112 is manufactured using silver exhibiting superior electric conductivity.

The second conductive unit 120 is provided to electrically input information to the LCM arranged at the side of the LCD and forming an image. The second conductive unit 120 includes a tempered glass substrate 121 formed of tempered glass, a second ITO coating layer 122 coated on an upper surface of the tempered glass substrate 121, and a second electrode 123 printed on the edge of an upper surface of the second ITO coating layer 122.

The tempered glass substrate 121 has a panel shape and is formed of tempered glass. The tempered glass is formed by heating formed glass at 500-600°C, compression deforming a surface portion of glass by rapidly cooling the heated glass using compressed cooling air, and tensile deforming the inside of the cooled glass.

Referring to FIG. 3, the tempered glass substrate 121 is completed by performing an etching process to a glass sheet G formed of tempered glass. The etching process is a method of processing a surface using a corrosion operation of a chemical. According to the etching process, a desired shape is obtained by performing an anti-etching process only to a necessary area of a material in use and then etching the material to remove an unnecessary portion.

In the present embodiment, the tempered glass substrate 121 is provided by a variety of etching processes, in particular, by a laser etching process. The laser etching process is a processing technology to manufacture a desired shape using a chemical reaction between a material and an etching solution generated in a portion locally heated by a laser beam. The laser etching process is suitable for processing of a fine structure because the process produces a clean processed surface and a heat affected zone (HAZ) is small.

Unlike a mechanical process, or a process using a numerical control (NC) or wheel diamond, of a conventional substrate that is formed of general glass, the tempered glass substrate 121 undergoes a glass cutting process by the etching process, so that a job of processing a hole 121 a or processing the edge of the tempered glass substrate 121 to be curved may be easily performed.

Also, unlike a conventional technology of individually processing substrates, a plurality of the tempered glass substrates 121 may be produced in a lump sum by performing the etching process to the overall surface of the glass sheet G so that a production cost may be reduced.

Of course, the tempered glass substrate 121 is formed by using a computer numerical control (CNC) and the scope of the claim is not limited by the manufacturing method of the tempered glass substrate 121.

The second ITO coating layer 122 is provided by coating ITO on the upper surface of the tempered glass substrate 121, or as an ITO patterning layer (not shown) obtained by partially coating ITO as necessary. The second electrode 123 formed of silver is printed on the edge of the upper surface of the second ITO coating layer 122.

Referring to FIG. 2, the first conductive unit 110 and the second conductive unit 120 are electrically connected by an AG dot 140. The AG dot 140 may be replaced by a flexible printed circuit (FPC; not shown).

A dot spacer 150 is provided between the first conductive unit 110 and the second conductive unit 120. The dot spacer 150 separates the first conductive unit 110 and the second conductive unit 120 from each other and has elasticity to be pressed during the use of the touch panel 10 so that the first and second electrodes 113 and 123 may be electrically connected to each other.

That is, when the upper portion of the first conductive unit 110 is pressed using a finger or a touch pen, the dot spacer 150 is elastically pressed so that the first electrode 113 of the first conductive unit 110 and the second electrode 123 of the second conductive unit 120 are electrically connected to each other. After a voltage value changed by a resistance value of a touched position is read, a control unit (not shown) searches for a touch coordinate according to a change in a potential difference.

The first conductive unit 110 and the second conductive unit 120 are attached to each other via an insulating adhesive member 520 having an insulation characteristic. The insulating adhesive member 520 may be an adhesive tape, a cell type adhesive, silicon, or an UV hardner. However, the insulating adhesive member 520 may be omitted herein unlike the present embodiment. In this case, a coating layer (not shown) obtained by coating an insulation material such as alumina Al₂O₃, silica SiO₂, and MgO on at least one of the first and second conductive units 110 and 120.

When the touch panel 10 using tempered glass according to the present embodiment is applied to mobile phones, holes 111 a and 121 a of FIG. 1 formed at a position corresponding to the position of a speaker (not shown) are connected to each other.

In the touch panel 10 according to the present embodiment, since the tempered glass substrate 121 is manufactured by the etching process, not only the edge of the tempered glass substrate 121 is processed to be curved, but also the hole 121 a is easily processed. In addition, the touch panel 10 using the tempered glass substrate 121 is strong to heat, exhibits a superior light transmissivity, and is resistive to scratches or bending occurring during processing.

The LCM forming an image is coupled to a lower surface of the touch panel 10. A variety of images are formed on the LCM according to electric information input through the touch panel 10. The LCM includes a backlight (not shown) as a light source.

The touch panel 10 and the LCM are attached to each other using an optical clear adhesive (OCA; not shown). Also, a case (not shown) is coupled to the outside of the LCM. The coupling of the touch panel 10, the LCM, and the case is the same as that in touch panels 10a, 20, 20a, 30, 40, and 40a using tempered glass according to other embodiments, a repeated description thereof will be omitted herein.

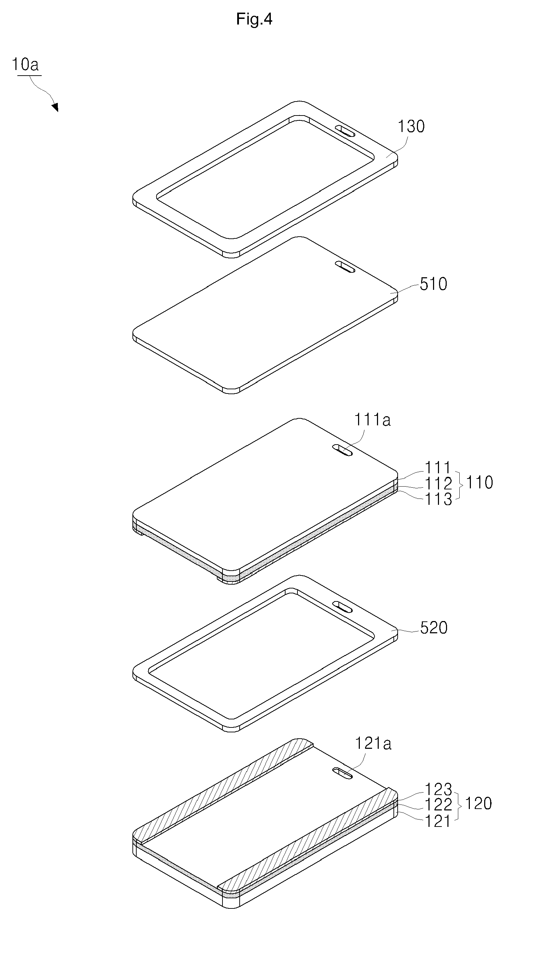

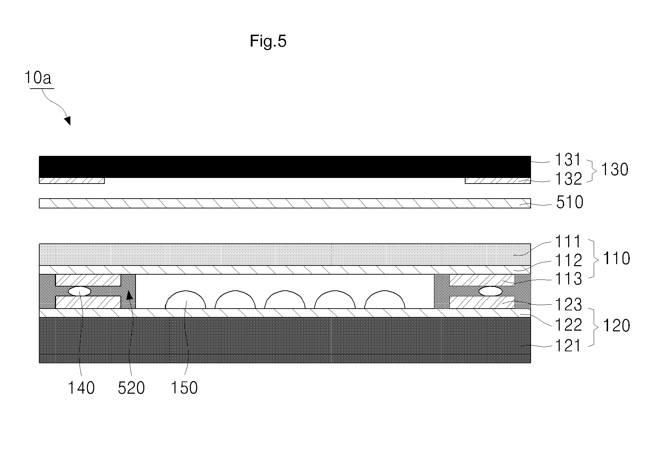

FIG. 4 is an exploded perspective view of a touch panel 10a using tempered glass according to another embodiment of the present invention. FIG. 5 is a side view of the touch panel 10a using tempered glass of FIG. 4.

The touch panel 10a using tempered glass according to another embodiment of the present invention is a window type touch panel that is obtained by adding a window film to the general type touch panel 10 of FIG. 1. In the following description, like reference numerals denote like constituent elements. Since the structure of the touch panel 10a using tempered glass according to the present embodiment is substantially the same as that of the touch panel 10 using tempered glass of FIGS. 1 and 2, except that a conductive unit protection unit 130 is added, a detailed description thereof will be omitted herein.

Referring to FIGS. 4 and 5, the touch panel 10a using tempered glass according to the present embodiment includes the first conductive unit 110, the second conductive unit 120 separated a predetermined distance from the first conductive unit 110, and the conductive unit protection unit 130 provided on the upper surface of the first conductive unit 110. The conductive unit protection unit 130 to protect the first and second conductive units 110 and 120 from external shocks includes a window film 131 and a printing layer 132 printed on a lower surface of the window film 131. The window film 131 is manufactured of a general PET film. Information such as a company logo or a product name may be marked on the printing layer 132.

The conductive unit protection unit 130 not only protects the first and second conductive units 110 and 120, but also functions as a scattering prevention film for preventing debris from scattering toward a user when the touch panel 10a is destroyed due to external shocks. The conductive unit protection unit 130 and the first conductive unit 110 are attached to each other using an optical clear adhesive OCA 510. The OCA 510 refers to a transparent adhesive layer.

In the touch panel 10a using tempered glass according to the present embodiment, since the tempered glass substrate 121 is manufactured by the etching process, it is easy to not only process the edge of the tempered glass substrate 121 to be curved, but also process the hole 121a of the tempered glass substrate 121. In addition, the touch panel 10a using the tempered glass substrate 121 is strong to heat, exhibits a superior light transmissivity, and is resistive to scratches or bending occurring during processing.

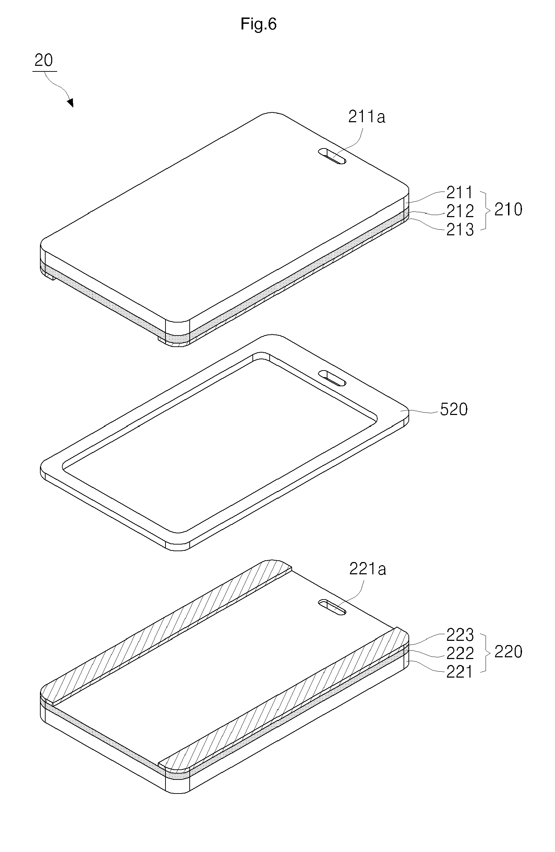

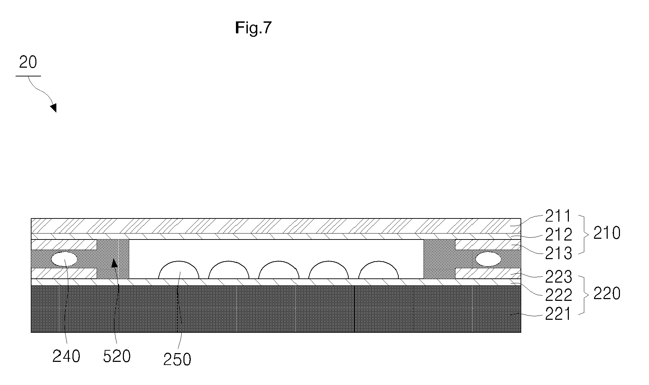

FIG. 6 is an exploded perspective view of a touch panel 20 using tempered glass according to another embodiment of the present invention. FIG. 7 is a side view of the touch panel using tempered glass of FIG. 6. Referring to FIGS. 6 and 7, the touch panel 20 using tempered glass according to the present embodiment includes a first conductive unit 210 and a second conductive unit 220 separated a predetermined distance from the first conductive unit 210.

The first conductive unit 210 is provided to electrically input information to the LCM arranged at a side of an LCD device to form an image. The first conductive unit 210 includes a first substrate 211 formed of tempered glass, a first ITO coating layer 212 coated on a lower surface of the first substrate 211, and a first electrode 213 printed on the edge of a lower surface of the first ITO coating layer 212.

The first substrate 211 has a panel shape and is formed of tempered glass. The first substrate 211 is manufactured by the etching process, in particular, a laser etching process. The method of forming the first substrate 211 by the laser etching process and the advantages of the method are the same as those of the tempered glass substrate 121 of the touch panel 10 using tempered glass according to the above-described embodiment.

The first ITO coating layer 212 may be provided by coating ITO on the lower surface of the first substrate 211, or as an ITO patterning layer (not shown) having a specific shape as necessary. Also, the first electrode 213 formed of a silver material is printed on the edge of the lower surface of the first ITO coating layer 212.

Referring to FIGS. 6 and 7, the second conductive unit 220 is provided to electrically input information to the LCM arranged at the side of the LCD and forming an image. The second conductive unit 220 includes a second substrate 221 formed of tempered glass, a second ITO coating layer 222 coated on an upper surface of the second substrate 221, and a second electrode 223 printed on the edge of an upper surface of the second ITO coating layer 222.

The method of forming the second substrate 221 by the laser etching process and the advantages of the method are the same as those of the tempered glass substrate 121 of the touch panel 10 using tempered glass according to the above-described embodiment.

The second ITO coating layer 222 may be provided by coating ITO on the upper surface of the second substrate 221, or as an ITO patterning layer (not shown) having a specific shape as necessary. Also, the second electrode 223 formed of a silver material is printed on the edge of the upper surface of the second ITO coating layer 222.

The first conductive unit 210 and the second conductive unit 220 are electrically connected by an AG dot 240. The AG dot 240 may be replaced by a flexible printed circuit (FPC; not shown).

A dot spacer 250 is provided between the first conductive unit 210 and the second conductive unit 220. The things of the dot spacer 250 are the same as those of the things of the dot spacer 150 of the touch panel 10 using tempered glass according to the above-described embodiment.

The first conductive unit 210 and the second conductive unit 220 are attached to each other via an insulating adhesive member 520 having an insulation characteristic. The insulating adhesive member 520 may be an adhesive tape, a cell type adhesive, silicon, or an UV hardner.

When the touch panel 20 using tempered glass according to the present embodiment is applied to mobile phones, holes 211 a and 221 a of FIG. 6 formed at a position corresponding to the position of a speaker (not shown) are connected to each other.

In the touch panel 20 according to the present embodiment, since the first and the second substrate 211 and 221 are manufactured by the etching process, not only the edge of the first and the second substrate 211 and 221 are processed to be curved, but also the holes 211a and 221 a are easily processed.

In addition, the touch panel 20 using the first and second substrates 211 and 221 formed of tempered glass is strong to heat, exhibits a superior light transmissivity, and is resistive to scratches or bending occurring during processing.

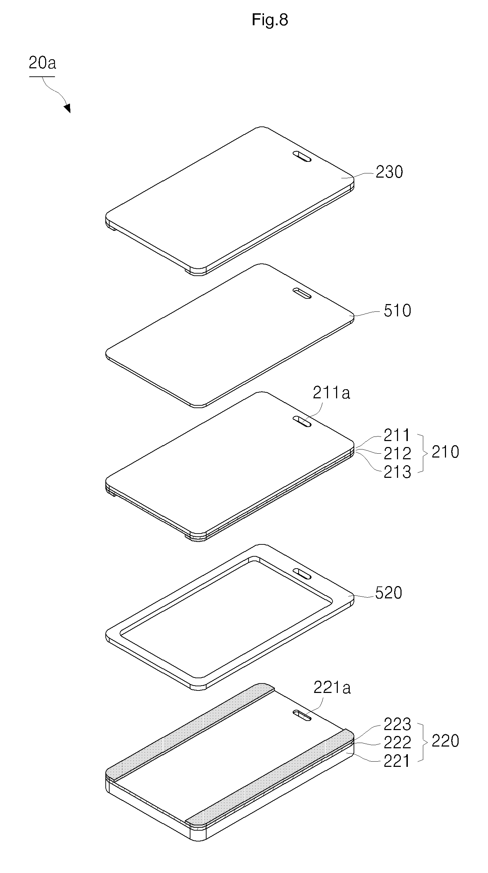

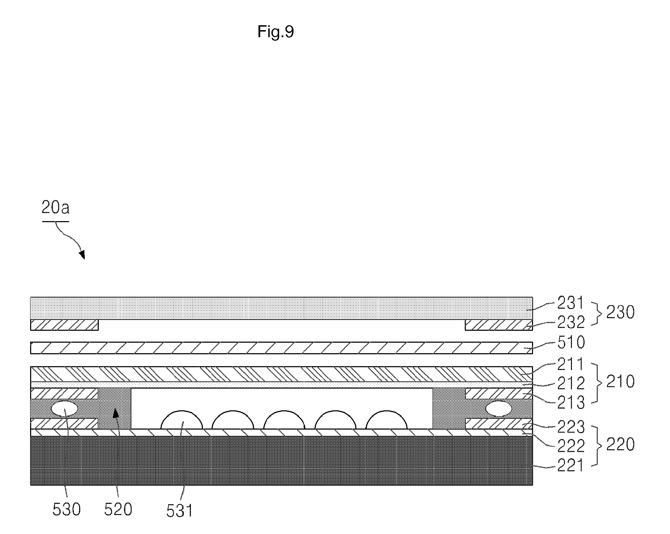

FIG. 8 is an exploded perspective view of a touch panel 20a using tempered glass according to another embodiment of the present invention. FIG. 9 is a side view of the touch panel 20a using tempered glass of FIG. 8.

The touch panel 20a using tempered glass according to another embodiment of the present invention is a window type touch panel that is obtained by adding a window film to the general type touch panel 20 of FIG. 6. In the following description, like reference numerals denote like constituent elements. Since the structure of the touch panel 20a using tempered glass according to the present embodiment is substantially the same as that of the touch panel 20 using tempered glass of FIGS. 6 and 7, except that a conductive unit protection unit 230 is added, a detailed description thereof will be omitted herein.

Referring to FIGS. 8 and 9, the touch panel 20a using tempered glass according to the present embodiment includes the first conductive unit 210, the second conductive unit 220 separated a predetermined distance from the first conductive unit 210, and the conductive unit protection unit 230 provided on the upper surface of the first conductive unit 210. The conductive unit protection unit 230 to protect the first and second conductive units 210 and 220 from external shocks includes a window film 231 and a printing layer 232 printed on a lower surface of the window film 231. The window film 231 is manufactured of a general PET film. Information such as a company logo or a product name may be marked on the printing layer 232.

The conductive unit protection unit 230 not only protects the first and second conductive units 210 and 220, but also functions as a scattering prevention film for preventing debris from scattering toward a user when the touch panel 20 is destroyed due to external shocks. The conductive unit protection unit 230 and the first conductive unit 210 are attached to each other using the OCA 510.

In the touch panel 20a using tempered glass according to the present embodiment, since the first and second substrates 211 and 221 are manufactured formed of a tempered glass material by the etching process, it is easy to not only process the edges of the first and second substrates 211 and 221 to be curved, but also process holes 211 a and 221 a. In addition, according to the present embodiment, the touch panel 20a using the first and second substrates 211 and 221 formed of tempered glass is strong to heat, exhibits a superior light transmissivity, and is resistive to scratches or bending occurring during processing.

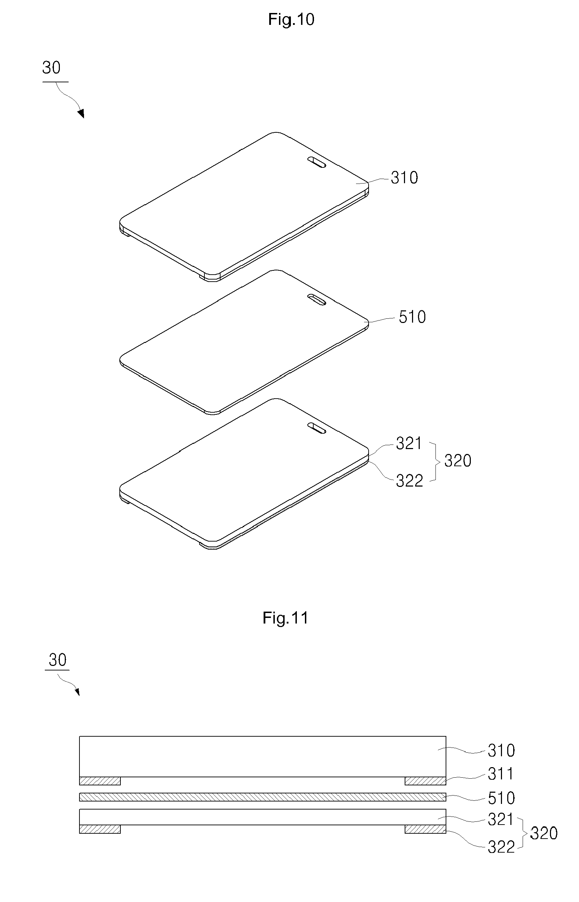

FIG. 10 is an exploded perspective view of a touch panel 30 using tempered glass according to another embodiment of the present invention. FIG. 11 is a side view of the touch panel 30 using tempered glass of FIG. 10. The touch panel 30 according to the present embodiment is a capacitive type touch panel and has a different structure from those of the touch panels 10, 10a, 20, and 20a using tempered glass according to the above-identified embodiments which are resistive type touch panels.

Referring to FIGS. 10 and 11, the touch panel 30 using tempered glass according to the present embodiment includes a window unit 310 and a touch panel unit 320 coupled to a lower surface of the window unit 310. The window unit 310 is provided to protect the LCM arranged at the side of the LCD and forming an image and manufactured of tempered glass having a panel shape.

The window unit 310 that is manufactured of tempered glass unlike a LCM protection window according to a conventional technology manufactured of acryl or general glass exhibits superior shock-resistive, heat-resistive, and safety characteristics. Also, since the shape of the window unit 310 may be diversely modified by an etching process, in particular, by a laser etching process, a variety of designs for a product using the touch panel 30 are available. The window unit 310 further includes a printing layer 311 printed on the lower surface of the window unit 310. The printing layer 311 is provided to indicate a company logo or a product name.

The printing layer of a touch panel according to a conventional technology is generally printed on a lower surface of a scattering prevention film. However, since the touch panel 30 using tempered glass according to the present embodiment omits the scattering prevention film, the printing layer 311 is printed directly on the lower surface of the window unit 310. Accordingly, since the scattering prevention film is omitted and the printing layer 311 is printed directly on the lower surface of the window unit 310, the overall thickness of the touch panel 30 may be reduced.

The touch panel unit 310 includes an ITO film 321 attached to the lower surface of the window unit 310 and an electrode 322 printed on the edge of a lower surface of the ITO film 321. The ITO film 321 refers to a film having a side surface, on which ITO is coated, and exhibiting electric conductivity and being transparent. The ITO film 321 may be provided as a film including a ITO patterning layer having a specific shape as necessary. The electrode 322 may be manufactured of silver exhibiting superior electric conductivity.

When the touch pad unit 320, in particular, the window unit 310 coupled to the touch pad unit 320, is touched using a finger or a touch pen, the equipotential state of the ITO film 321 is broken at a point that is touched so that current may be generated. As the current flows, electric charges are charged and the amount of charge is detected by a current sensor (not shown) connected to the electrode 322 printed on the edge of the lower surface of the ITO film 321. As the conversion position is detected by an analog-to-digital converter (not shown), an accurate touch position may be recognized.

As described above, since the touch panel 30 using tempered glass according to the present embodiment is a capacitive type touch panel, the touch pad unit 320 may be embodied by a sheet of the ITO film 321 only.

According to the touch panel 30 of the present embodiment, the window unit 310 manufactured of tempered glass may prevent the touch panel 30 from being destroyed. Also, even when the window unit 310 is destroyed, the ITO film 321 coupled to the window unit 310 may prevent debris of the window unit 310 from being scattered to a user.

The touch pad unit 320 having a double function of the scattering prevention film is provided to have a size slightly smaller or equal to that of the window unit 310. The window unit 310 and the touch panel unit 320 are attached to each other using the above-described OCA 510.

According to the touch panel 30 of the present embodiment, since the window unit 310 and the touch pad unit 320 having a size slightly smaller or equal to that of the window unit 310 are coupled to each other using the OCA 510, the scattering prevention film according to the conventional technology may be omitted. Accordingly, the light transmissivity of the touch panel 30 may be improved and the thickness of the touch panel 30 may be reduced. Also, as the process of attaching the scattering prevention film is omitted, process costs and material costs may be reduced.

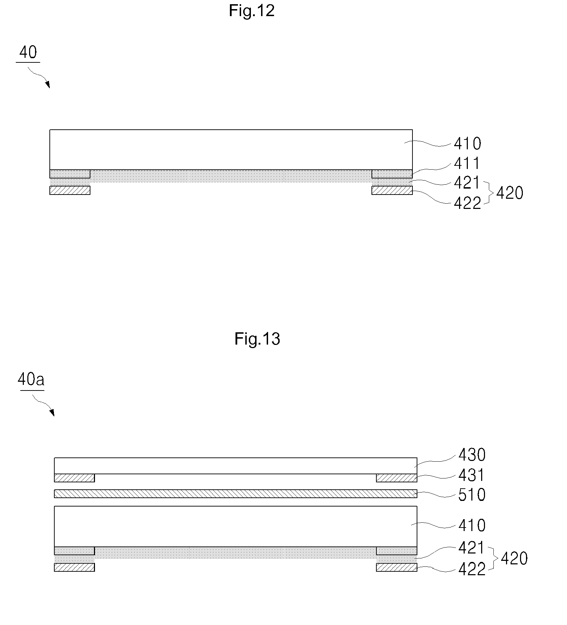

FIG. 12 is an exploded perspective view of a touch panel 40 using tempered glass according to another embodiment of the present invention. Referring to FIG. 12, the touch panel 40 using tempered glass according to the present embodiment includes a window unit 410 and a touch panel unit 420 coupled to a lower surface of the window unit 410. A printing layer 411 is printed on the lower surface of the window unit 410. Since the structures of the window unit 410 and the printing layer 411 according to the present embodiment are the same as those of the window unit 310 and the printing layer 311 of the touch panel 30 using tempered glass of FIGS. 10 and 11, detailed descriptions thereof will be omitted herein.

The touch pad unit 420 includes an ITO coating layer 421 coated on the lower surface of the window unit 410 and an electrode 422 printed on the edge of a lower surface of the ITO coating layer 421. The ITO coating layer 421 may be provided as an ITO patterning layer (not shown) having a specific shape. The electrode 422 is manufactured of silver.

A method of coating the ITO coating layer 421 on the window unit 410 manufactured of tempered glass may include a dry coating process such as an evaporation method, a sputtering method, a chemical vapor deposition (CVD) method, and an ion plating method.

According to the touch panel 40 of the present embodiment, the window unit 410 manufactured of tempered glass may prevent the touch panel 40 from being destroyed. Also, even when the window unit 410 is destroyed, the OCA that couples the window unit 410 and the LCM may prevent debris of the window unit 410 from being scattered to a user. Also, in the touch panel 40 according to the present embodiment, since the process of attaching the scattering prevention film is omitted, the light transmissivity of the LCD device may be improved and the overall thickness of the touch panel 40 may be reduced.

FIG. 13 is a side view of a touch panel 40a using tempered glass according to another embodiment of the present invention. The touch panel 40a using tempered glass according to the present embodiment is a window type touch panel that is obtained by adding a window film 430 to the general type touch panel 40 of FIG. 12. In the following description, like reference numerals denote like constituent elements. Since the structure of the touch panel 40a using tempered glass according to the present embodiment is substantially the same as that of the touch panel 40 using tempered glass of FIG. 12, except that the window film 430 is added, a detailed description thereof will be omitted herein.

Referring to FIG. 13, the touch panel 40a includes a window unit 410, a touch panel unit 420 coupled to a lower surface of the window unit 410, and a window film 430 provided on an upper surface of the window unit 410. The window film 430 is coupled to the upper surface of the window unit 410 to prevent destruction of the window unit 410 due to external shocks. The window film 430 is manufactured of a general PET film and further includes a printing layer 431 printed on the lower surface of the window film 430.

Information such as a company logo or a product name may be marked on the printing layer 431. In this case, the printing layer 411 of FIG. 12 that is directly printed on the lower surface of the window unit 410 is omitted. Accordingly, in the touch panel 40a of the present embodiment, in which the process of attaching the scattering prevention film is omitted, process costs and material costs may be reduced , the light transmissivity of the LCD device may be improved, and the overall thickness of the touch panel 40a may be reduced. Also, in the touch panel 40a of the present embodiment, even when the window unit 410 is destroyed, the window film 430 may prevent debris of the window unit 410 from being scattered to a user so that user safety may be improved.

As described above, according to the present invention, by using a touch panel using tempered glass, not only strength and rigidity are substantially improved compared to a conventional touch panel that is manufactured of general glass or acryl, but also a variety of designs are available.

While this invention has been particularly shown and described with reference to preferred embodiments thereof, it will be understood by those skilled in the art that various changes in form and details may be made therein without departing from the spirit and scope of the invention as defined by the appended claims.

### Industrial Applicability

The present invention may be applied for technical fields such as manufacturing of capacitive type or resistive type touch panels.

## Claims

1. A touch panel (10, 10a, 20, 20a) using tempered glass comprising:
a first conductive unit (110, 210) which comprises a conductive film (111) or a first substrate (211) formed of tempered glass, a first indium-tin oxide (ITO) coating layer (112, 212) coated on a lower surface of the conductive film or the first substrate (111, 211), and a first electrode (113, 213) printed on an edge of a lower surface of the first ITO coating layer (112, 212); and
a second conductive unit (120, 220) which comprises a second substrate (121, 221) formed of tempered glass, a second ITO coating layer (122, 222) coated on an upper surface of the second substrate (121, 221), and a second electrode (123, 223) printed on an edge of an upper surface of the second ITO coating layer (122, 222).

2. The touch panel of claim 1, further comprising a conductive unit protection unit (130, 230) which is provided on an upper surface of the first conductive unit (110, 210) to protect the first conductive unit.

3. The touch panel of claim 2, wherein the conductive unit protection unit comprises:
a window film (131, 231) provided in an area having a size that is substantially the same as that of the conductive film (111) or the first substrate (211);

4. The touch panel of claim 2 or 3, further comprising a printing layer (132, 232) printed on a lower surface of the window film (131, 231), wherein a character or a logo is marked on the printing layer.

5. The touch panel of claim 3, wherein the window film (131, 231) is formed of a poly ethylene terephthalate (PET) film.

6. The touch panel of claim 2, wherein the first conductive unit (110, 210) and the conductive unit protection unit (130, 230) are attached to each other using an optical clear adhesive (OCA) (510).

7. The touch panel according to one of the claims 1 to 6, wherein the tempered glass substrate is formed by an etching process, in particular a laser etching process.

8. The touch panel according to one of the claims 1 to 6, wherein the tempered glass substrate is one of a plurality of tempered glass substrates provided by performing an etching process to a glass sheet that is formed of tempered glass.

9. The touch panel of claim 1, wherein the first conductive unit (110, 210) and the second conductive unit (120, 220) are attached to each other using an insulating adhesive member (520) having an insulation characteristic.

10. The touch panel of claim 1, wherein an insulation material is coated between the first conductive unit and the second conductive unit.

11. The touch panel according to one of the claims 1 to 10, wherein the tempered glass substrate has a curved edge.

12. The touch panel according to one of the claims 1 to 11 using tempered glass of claim 11, wherein each of the first and second substrates is one of a plurality of tempered glass substrates provided by performing an etching process to a glass sheet that is formed of tempered glass.

13. A touch panel (30, 40) using tempered glass comprising:
a window unit (310, 410) formed of a tempered glass material; and
a touch pad unit (320, 420) coupled to a lower surface of the window unit (310, 410) and inputting an electric signal to a liquid crystal display (LCD) module for forming an image when the window unit is touched and preventing scattering of glass debris when the window unit is destroyed.

14. The touch panel of claim 13, wherein the touch pad unit (320) comprises:
an indium-tin oxide (ITO) film (321) coated with ITO; and
an electrode (322) printed in an edge of a lower surface of the ITO film.

15. The touch panel of claim 14, wherein the ITO film (321) has a size that is substantially the same as that of the window unit (310).

16. The touch panel of claim 14 or 15, wherein the window unit (310) and the ITO film (321) are attached to each other using an optical clear adhesive (OCA) (510).

17. The touch panel according to one of the claims 13 to 16, wherein the window unit (310) further comprises a printing layer (311), the printing layer being provided on a lower surface of the window unit and on which a character or a logo is marked.

18. The touch panel of claim 13, wherein the touch pad unit (420) comprises:
an ITO coating layer (421) coated on a lower surface of the window unit; and
an electrode (422) printed in an edge of a lower surface of the ITO coating layer.

19. The touch panel of claim 18, further comprising a window film (430) provided on an upper surface of the window unit (410) to protect the window unit.

20. The touch panel using tempered glass of claim 19, wherein the window film (430) further comprises a printing layer (431), the printing layer provided on a lower surface of the window unit (410) and on which a character or a logo is marked.

21. The touch panel of claim 19 or 20, wherein the window film is formed of a poly ethylene terephthalate (PET) film.

22. The touch panel according to one of the claims 19 to 21, wherein the window unit and the window film are attached to each other using an optical clear adhesive (OCA) (510).

23. The touch panel according to one of the claims 13 to 22, wherein the window unit is formed by an etching process.

24. The touch panel according to one of the claims 13 to 23, wherein the window unit is one of a plurality of window units provided by performing an etching process to a glass sheet that is formed of tempered glass.
